## Europäisches Patentamt
## European Patent Office
## Office européen des brevets

(19)

(11) Veröffentlichungsnummer : **0 191 305**
**B1**

(12)

# EUROPÄISCHE PATENTSCHRIFT

(45) Veröffentlichungstag der Patentschrift :
17.05.89

(51) Int. Cl.⁴ : **G 01 G 19/12**

(21) Anmeldenummer : **86100398.6**

(22) Anmeldetag : **14.01.86**

(54) Vorrichtung zum Messen der Achslast von Fahrzeugen.

(30) Priorität : **13.02.85 DE 3504885**
**31.08.85 DE 3531245**

(43) Veröffentlichungstag der Anmeldung :
**20.08.86 Patentblatt 86/34**

(45) Bekanntmachung des Hinweises auf die Patenterteilung : **17.05.89 Patentblatt 89/20**

(84) Benannte Vertragsstaaten :
**DE FR GB IT NL SE**

(56) Entgegenhaltungen :
**EP-A- 0 127 278**
**EP-A- 0 129 331**
**DE-A- 2 264 496**
**DE-B- 2 722 655**
**GB-A- 1 159 524**
**US-A- 3 447 367**
**US-A- 3 800 895**

(73) Patentinhaber : **ROBERT BOSCH GMBH**
**Postfach 50**
**D-7000 Stuttgart 1 (DE)**

(72) Erfinder : **Faass, Manfred**
**Murgstrasse 5**
**D-7507 Pflnztal 1 (DE)**
Erfinder : **Hecht, Hans, Dipl.-Phys.**
**Heblchstrasse 12**
**D-7015 Korntal-Münchingen (DE)**
Erfinder : **Jansche, Walter**
**Pestalozzistrasse 7**
**D-7552 Durmershelm (DE)**
Erfinder : **Kiefer, Günter**
**Lisztstrasse 1**
**D-7535 Königsberg-Steln (DE)**
Erfinder : **Leibfried, Wolfgang, Dr. Dipl.-Phys.**
**Obere Burghaide 70**
**D-7250 Leonberg (DE)**
Erfinder : **Stecher, Günther, Dipl.-Phys.**
**Seestrasse 64**
**D-7140 Ludwigsburg (DE)**
Erfinder : **Zabler, Erich, Dr. Dipl.-Ing.**
**Brunhildstrasse 11**
**D-7513 Stutensee 1 (DE)**

EP 0 191 305 B1

## Beschreibung

Die Erfindung geht aus von einer Vorrichtung zum Messen der Achslast von Fahrzeugen nach der Gattung des Hauptanspruchs 1.

Eine derartige Vorrichtung ist bekannt (GB-PS 11 59 524). Bei dieser bekannten Vorrichtung wird ein Sensor außen am Achsgehäuse befestigt. Der Sensor hat vier Fühler, von denen zwei an der Unterseite und zwei an der Oberseite der Achse angeordnet sind. Wenn an ihnen durch Achsbiegungen eine Längenänderung wirkt, wird in den Fühlern eine Meßspannung erzeugt, die abgegriffen und zur Bestimmung von Belastungsänderungen ausgewertet wird. Es ist aber schwierig, solche Sensoren am Achsgehäuse zu befestigen. Sie können leicht verlorengehen oder beschädigt werden, so daß sie zwar kurzzeitig funktionieren, auf die Dauer aber nicht zuverlässig sind. Solche Dehnungsmeßstreifen sind deshalb in einer Serienfertigung nicht verwendbar. Außerdem sind sie schlecht austauschbar und zum Ansteuern von lastabhängigen Bremskraftreglern nicht geeignet, wo Zuverlässigkeit und lange Standzeiten erforderlich sind.

Desweiteren ist es durch die US-A-34 47 367 bereits bekannt, Sensoren mit Hilfe kegeliger Flächen zu fixieren ; diese Befestigung wird aber mittels Schrauben durchgeführt.

Der Erfindung liegt die Aufgabe zugrunde, diese Nachteile zu vermeiden und eine eingangs genannte vorrichtung zu schaffen, bei der die Sensoren gut und sicher zu befestigen sind. Die Befestigung soll zuverlässig arbeiten und eine lange Lebensdauer haben. Durch die besondere Befestigung soll sie einen guten und lange Zeit stabilen Kraftschluß mit dem Achsgehäuse besitzen.

Diese Aufgabe wird gemäß der Erfindung bei der gattungsgemäßen Vorrichtung durch die kennzeichnenden Merkmale des Patentanspruchs 1 gelöst.

Mehrere Ausführungsbeispiele der Erfindung sind in der Zeichnung dargestellt und in der nachfolgenden Beschreibung näher erläutert. Es zeigen : Figur 1 die Anbaustellen der Sensoren an einem Fahrzeug, Figur 2 ein Dehnungs-Diagramm, Figur 3 eine Schaltung, Figuren 4 und 5 je eine andere Schaltung, Figur 6 eine konische Ausführung des Sensors und die Figuren 7 und 8 weitere Ausführungen eines konischen Sensors.

Ein Straßen-Nutzfahrzeug hat eine Antriebsachse, die aus zwei Halbachsen besteht, von denen jede ein Fahrzeugrad 1 und 2 trägt. Ein die Halbachsen aufnehmendes Achsgehäuse 3 hat einen Tunnel 4 für den Antrieb und zwei hohle, kegelige Arme 5 und 6, die zur Abstützung eines Wagenkastens 7 und zur Aufnahme der Fahrzeug-Halbachsen bestimmt sind.

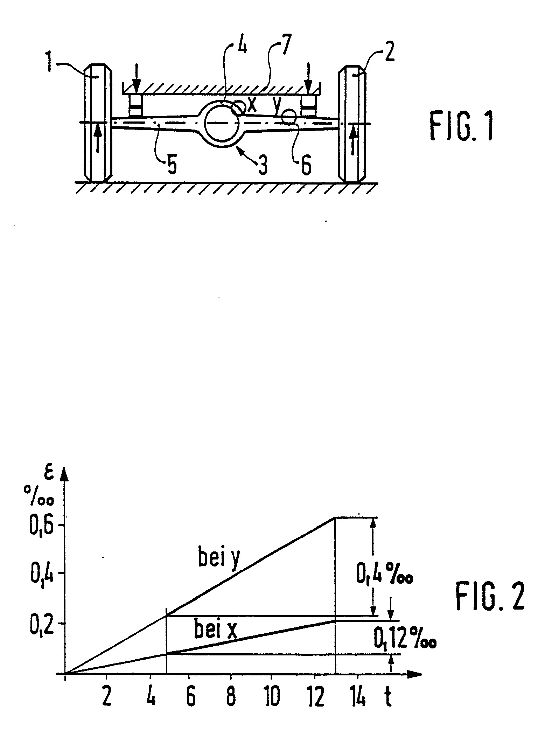

Am Achsgehäuse 3 sind zwei alternative Meßstellen X und Y vorgesehen, von denen die eine (X) im Bereich des Tunnels 4 und die andere (Y) an einem Arm 6 angeordnet ist. Im Diagramm nach der Figur 2 ist zu erkennen, daß bei senkrechter Belastung des Achsgehäuses 3 die größere Dehnung an der Meßstelle Y auftritt. Diese Erkenntnis muß bei der Wahl der Anordnung der Meßstellen berücksichtigt werden.

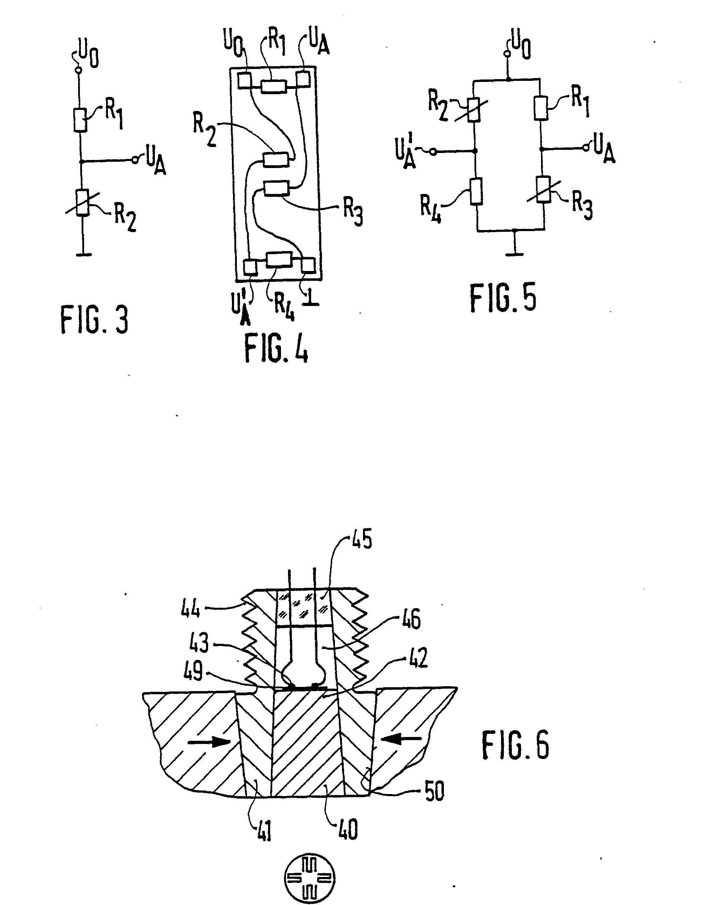

Die Figur 3 zeigt die Schaltung der Dehnwiderstände 14. Dabei ist eine Vollbrücken-Ausführung in Form einer Wheatstoneschen Brücke dargestellt.

Die Widerstände $R_1$, $R_2$, $R_3$ und $R_4$ sind entweder in konventioneller Kleetechnik oder in Dick- oder Dünnschichttechnik ausgeführt. Es können zur Herstellung der Meßscheiben 11 und 20 aber auch emaillierte Stahlplättchen verwendet werden, die sich besonders zur Aufbringung von Dickschicht-Dehnungsmeßstreifen eignen.

Die Ausführung nach der Figur 5 hat den Vorteil, daß sich die Widerstandsänderungen durch die Einpressung in der Brückenschaltung kompensieren im Gegensatz zu der Ausführung nach der Figur 4.

Die Figur 4 zeigt eine weitere Vereinfachung der Erfindung. Hier ist ein rechteckiges Meßplättchen 30 mit seinen beiden Längsseiten unmittelbar in eine Sackbohrung 31 des Achsgehäuses 3 als Meßbohrung mit Preßsitz eingesetzt. Mit einem Teil 32 seiner Länge ragt das Meßplättchen 30 aus der Meßbohrung 31 heraus. Wie die Draufsicht zeigt, ist das Meßplättchen 30 der Krümmung der Wand der Bohrung 31 entsprechend angepaßt, vorzugsweise durch Schleifen. Die Einpreßflächen des Meßplättchens 30 haben eine hochwertig bearbeitete Oberfläche. Dadurch besitzt das Meßplättchen 30 nur geringe Hysteresefehler. Dies gilt sinngemäß selbstverständlich auch für die Sensoren nach der Figur 5. Die zwischen der Bohrungswand und den Seitenflächen des Meßplättchens 30 entstehenden Freiräume 32 und 33 können für die Zuführungsleitungen der Widerstände $R_1$ und $R_2$ benutzt werden, die auf dem Meßplättchen 30 angebracht sind. Die Anordnung der Widerstände $R_1$ und $R_2$ ist der dargestellten Seitenansicht zu entnehmen. Es ist zu erkennen, daß der aktive Widerstand $R_2$ innerhalb und der passive Widerstand $R_1$ außerhalb der Meßbohrung 31 liegen. Ein Loch 34 dient zum Herausziehen des Meßplättchens 30 aus der Meßbohrung 31 beim Auswechseln oder bei einer Reparatur. Dieser obere Teil des Meßplättchens 30 kann auch mit Mitteln zum Befestigen der Zuführungsleitungen sowie einer Abdeckkappe ausgerüstet werden. Das Meßplättchen 30 bietet ferner genügend Platz für eine hybrid aufgebrachte Elektronik zur Signalaufbereitung und -vorverstärkung, ohne daß irgendwelche Drahtkontaktierungen zu einer Zusatzschaltung erforderlich wären.

Alle dargestellten Bauweisen bedürfen der Einbringung der Dehnwiderstände in die Achsgehäuse-Bohrungen (Meßbohrungen) in einer Ausrichtung parallel zur Achsrichtung des Achsgehäuses, da nur so die von der Achslast herrührende Verformung aufgenommen werden kann. Ein der abgefühlten Verformung entsprechendes Signal wird einer elektronischen Schalteinrichtung zugeführt, die dann ein Signal an einen lastabhängigen Bremskraftregler abgibt. Der Bremskraftregler liegt in einer Bremsleitung, die von einem Bremsventil zu einem Radbremszylinder, vorzugsweise der Hinterachse führt. Der Bremsdruck in der Bremsleitung wird dann lastabhängig überwacht bzw. zwischen Vorder- und Hinterachse verteilt.

Eine weitere vorteilhafte Sensorausführung ist in Figur 6 dargestellt. Ein Sensor besteht hier aus zwei ineinander geschobenen und verpreßten Konen 40 und 41, die in einer Gehäusebohrung 50 angeordnet sind. Die Ausrichtung der Konen 40 und 41 ist vorzugsweise gegensinnig. Die Konusform hat gegenüber der Zylinderform den Vorteil, daß sie geringere Durchmessertoleranz erfordert und dennoch reproduzierbar eingepreßt werden kann sowie leichteren Ein- und Ausbau ermöglicht, also insgesamt wesentlich fertigungs- und montagefreundlicher ist. Einen dauerhaft guten Kraftschluß gewährleisten jedoch nur Konusformen mit sehr spitzem Kegelwinkel (typisch 1 : 50).

Der innere Konus 40, auf dessem verjüngtem Ende 42 auf einem Meßplättchen 49 ein Dehnwiderstand 43 aufgebracht ist, wird von unten her in den äußeren Konus 41 gepreßt. Hierbei können die Einpreßkräfte vorteilhafterweise auf der Gegenseite der Meßfläche aufgebracht werden, ohne den empfindlichen Dehnwiderstand 43 zu beschädigen. Der äußere Konus 41 trägt an seinem aus der Oberfläche ragenden Teil ein Gwinde 44, welches ein leichtes Ausheben des Sensors, z. B. mittels einer Abziehmutter ermöglicht. Der äußere Konus 41 besitzt gleichzeitig die Funktion eines hermetisch dichten, robusten Sensorgehäuses, das an seiner Oberseite zum Anschluß des Sensors eine elektrische Glasdurchführung 45 besitzt. Ein verbleibender Freiraum 46 im äußeren Konus nimmt die Verstärkerschaltung auf.

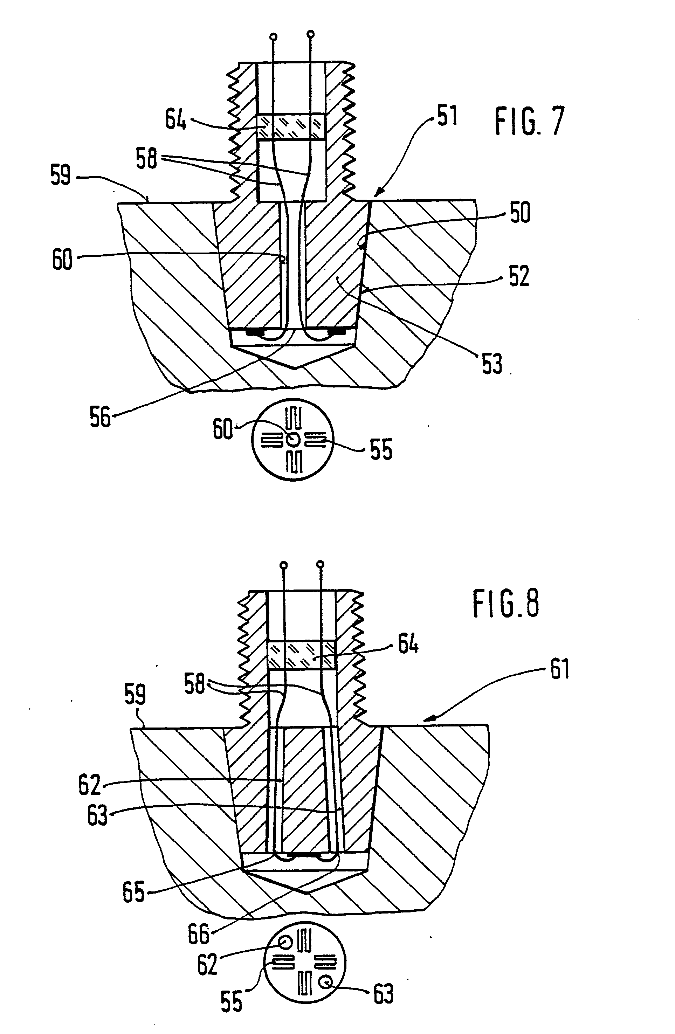

Die Ausführung nach der Figur 6 ist bei dem Beispiel nach der Figur 7 und 8 dadurch verändert, daß ein Sensor 51 nur einen einzigen Konus 52 hat, mit dem er in eine Gehäusebohrung 50 eingepreßt ist. Ein Schaft 53 des Konus 52 trägt Dehnwiderstände 55 (DMS-Widerstände), die am inneren Ende des Schaftes 53 aufgebracht sind. Der Konusschaft 53 ist mit mindestens einem Längskanal versehen, der bzw. die für eine Leitungsdurchführung bestimmt ist bzw. sind, durch den bzw. die hindurch zwei Leitungen 58 herausgeführt und zur Achsgehäuser-Oberfläche 59 geleitet sind.

Die Figur 7 zeigt einen Sensor 51 mit einem einzigen, koaxialen Längskanal 60. Die sacklochseitige Mündung des Längskanals trägt die Bezugszahl 56.

Die Figur 8 behandelt einen Sensor 61 mit zwei parallelen Längskanälen 62 und 63. Beiden Ausführungen gemeinsam sind die zwei Leitungen 58, die durch eine nach außen hermetisch abdichtende Glasdurchführung 64, die im oberen Teil des Sensors 51 bzw. 61 angeordnet ist, geführt sind. Auf der anderen Seite des Sensors sorgt die vorzugsweise geschliffene Konusfläche für eine sichere Abdichtung der DMS-Widerstände.

Bei der Bauweise nach der Figur 7 sind die DMS-Widerstände 55 peripher um die sacklochseitige Mündung 56 des Koaxialkanals 60 angeordnet, während die Konstruktion nach der Figur 8 die DMS-Widerstände 55 zentrisch an sacklochseitigen Mündungen 65 und 66 der achsparallelen Kanäle 62 und 63 aufweist.

## Patentansprüche

1. Vorrichtung zum Messen der Achslast von Fahrzeugen, insbesondere Straßenfahrzeugen, mit einem zur Aufnahme der Antriebsachse bestimmten Achsgehäuse, das bei wechselnder Achslast wechselnden Biegekräften unterworfen ist und mit einem Spannungsveränderungen am Achsgehäuse abtastenden Sensor, der entsprechende elektrische Signale an einen Empfänger abgibt, dadurch gekennzeichnet, daß das Achsgehäuse in Angriffsrichtung der Last zumindest weitgehend senkrecht zur Radachse mit einer Bohrung (26) als Meßbohrung versehen ist, in welcher der Sensor mit Hilfe einer Kegelsitzfläche befestigt ist.

2. Vorrichtung nach Anspruch 1, dadurch gekennzeichnet, daß die Meßbohrung (50) als Sackbohrung ausgeführt ist.

3. Vorrichtung nach Anspruch 1 oder 2, dadurch gekennzeichnet, daß das Meßplättchen (49) Dehnwiderstände ($R_1$, $R_2$, $R_3$, $R_4$) trägt.

4. Vorrichtung nach Anspruch 2 oder 3, dadurch gekennzeichnet, daß das Meßplättchen (49) rechteckig ist.

5. Vorrichtung nach einem der Ansprüche 2 bis 4, dadurch gekennzeichnet, daß das Meßplättchen (49) in Klebetechnik ausgeführt ist.

6. Vorrichtung nach einem der Ansprüche 2 bis 4, dadurch gekennzeichnet, daß das Meßplättchen (49) in Dick- bzw. Dünnschichttechnik ausgeführt ist.

7. Vorrichtung nach einem der Ansprüche 2 bis 6, dadurch gekennzeichnet, daß das Meßplättchen (49) als Halb- oder Vollbrücke verschaltet ist, wobei ein aktiver Teil ($R_2$, $R_4$) der Widerstände in der Dehnzone und der andere Teil ($R_1$, $R_3$) der Widerstände als passive Ergänzungswiderstände in ungedehnter Zone angeordnet sind.

8. Vorrichtung nach einem der Ansprüche 1 bis 7, dadurch gekennzeichnet, daß das Meßplättchen (49) mit einer hybrid aufgebrachten Elektronik zur Signal-Aufbereitung bzw. -vorverstärkung versehen ist.

9. Vorrichtung nach einem der Ansprüche 1 bis 8, dadurch gekennzeichnet, daß die Gehäusebohrung (50) zur Aufnahme des Sensors kegelig ausgebildet ist und zwei ineinandergesteckte Konen (40, 41) aufnimmt, von denen der innere (40) das Meßplättchen (49) trägt und der äußere (41) eine Glasdurchführung (45) und eine Verstärkerschaltung aufnimmt und mit einem Außengewinde (44) versehen ist.

10. Vorrichtung nach einem der Ansprüche 1 bis 8, dadurch gekennzeichnet, daß die Gehäusebohrung (50) zur Aufnahme des Sensors (51, 61) kegelig ausgebildet ist, daß ferner die Dehnwiderstände (55) an dem verjüngten Ende des ebenfalls kegeligen Sensor-Schaftes (53) angeordnet sind und der Schaft (53) mit Längskanälen (60 ; 62, 63) für eine Leitungsdurchführung von den Dehnwiderständen (55) zur Achsgehäuse-Oberfläche (59) versehen sind.

11. Vorrichtung nach Anspruch 10, dadurch gekennzeichnet, daß die Leitungsdurchführung ein koaxialer Längskanal (60) ist und daß die Dehnwiderstände (55) peripher um die sacklochseitige Mündung (56) des koaxialen Längskanals (60) angeordnet sind (Figur 11).

12. Vorrichtung nach Anspruch 15, dadurch gekennzeichnet, daß die Leitungsdurchführung durch achsparallele Längskanäle (62, 63) gebildet ist und daß die Dehnwiderstände (55) zentrisch an den sacklochseitigen Mündungen (65, 66) der achsparallelen Längskanäle (62, 63) angeordnet sind (Figur 12).

## Claims

1. Device for measuring the axle load of vehicles, particularly road vehicles having an axle housing which is intended to receive the drive axle and which is subject to fluctuating flexure forces under a fluctuating axle load, and having a sensor which senses stress variations at the axle housing and which delivers corresponding electrical signals to a receiver, characterized in that the axle housing is provided in the direction of engagement of the load and at least approximately at right angles to the wheel axis with a bore (26) as measurement bore, in which the sensor is fastened by means of a conical seat surface.

2. Device according to Claim 1, characterized in that the measurement bore (50) is constructed as a blind bore.

3. Device according to Claim 1 or 2, characterized in that the strain gauge (49) supports extensometer resistances ($R_1$, $R_2$, $R_3$, $R_4$).

4. Device according to Claim 2 or 3, characterized in that the strain gauge (49) is rectangular.

5. Device according to one of Claims 2 to 4, characterized in that the strain gauge (49) is constructed by bonding technology.

6. Device according to one of Claims 2 to 4, characterized in that the strain gauge (49) is constructed by thick-layer or thin-layer technology.

7. Device according to one of Claims 2 to 6, characterized in that the strain gauge (49) is wired as a halfbridge or full bridge, an active part ($R_2$, $R_4$) of the resistances being arranged in the extension zone and the other part ($R_1$, $R_3$) of the resistances as passive supplementary resistances in the unextended zone.

8. Device according to one of Claims 1 to 7, characterized in that the strain gauge (49) is provided with an electronic signal processing and preamplifier unit in hybrid arrangement.

9. Device according to one of Claims 1 to 8, characterized in that the housing bore (50) is of conical construction to receive the sensor, and receives two nested cones (40, 41), the inner (40) of which carries the strain gauge (4g) and the outer (41) receives a glass passage (45) and an amplifier circuit and is provided with an outer screw thread (44).

10. Device according to one of Claims 1 to 8, characterized in that the housing bore (50) is of conical construction to receive the sensor (51, 61), also that the extensometer resistances (55) are arranged at the tapered end of the likewise conical sensor shank (53) and the shank (53) are (sic) provided with longitudinal ducts (60 ; 62, 63) for a lead passage from the extensometer resistances (55) to the axle housing surface (59).

11. Device according to Claim 10, characterized in that the lead passage is a coaxial longitudinal duct (60) and that the extensometer resistances (55) are arranged peripherally round the blind hole side orifice (56) of the coaxial longitudinal duct (60) (Fig. 11).

12. Device according to Claim 15, characterized in that the lead passage is formed by axially parallel longitudinal ducts (62, 63) and that the extensometer resistances (55) are arranged centrically on the blind hole side orifices (65, 66) of the axially parallel longitudinal ducts (62, 63) (Fig. 12).

## Revendications

1. Dispositif pour mesurer la charge d'essieu de véhicules, en particulier de véhicules routiers, avec un carter d'essieu défini pour recevoir l'arbre de commande, carter qui est soumis à des efforts de flexion variables par suite de charges sur essieu variables et avec un détecteur explorant les variations de tension sur le carter d'essieu, détecteur qui délivre des signaux électriques correspondants à un récepteur, caractérisé en ce que le carter d'essieu, dans le sens d'attaque de la charge, du moins largement à la verticale de l'essieu, est muni d'un alésage (26) comme trou de contrôle, dans lequel le détecteur est fixé à l'aide d'une surface d'embase conique.

2. Dispositif selon revendication 1, caractérisé en ce que l'alésage de contrôle (50) est réalisé en trou borgne.

3. Dispositif selon revendication 1 ou 2, caractérisé en ce que la plaquette de contrôle (49) porte les résistances d'extension ($R_1$, $R_2$, $R_3$, $R_4$).

4. Dispositif selon revendication 2 ou 3, caractérisé en ce que la plaquette de contrôle (49) est rectangulaire.

5. Dispositif selon une des revendications 2 à 4, caractérisé en ce que la plaquette de contrôle (49) est réalisée en technique adhésive.

6. Dispositif suivant une des revendications 2 à 4, caractérisé en ce que la plaquette de contrôle (49) est réalisée en technique de couche épaisse ou de couche mince.

7. Dispositif selon une des revendications 2 à 6, caractérisé en ce que la plaquette de contrôle (49) est branchée comme demi-pont ou pont intégral, dans lequel sont placées une partie active ($R_2$, $R_4$) des résistances dans la zone d'allongement et l'autre partie ($R_1$, $R_3$) des résistances comme résistances de complément en zone non soumise à la traction.

8. Dispositif selon une des revendications 1 à 7, caractérisé en ce que la plaquette de contrôle (50) est munie d'une électronique introduite d'une façon hybride pour respectivement la préparation et l'amplification du signal.

9. Dispositif selon une des revendications 1 à 8, caractérisé en ce que l'alésage du carter (50) est formé conique pour recueillir le détecteur et reçoit deux cônes (40, 41) enfilés l'un dans l'autre, desquels l'intérieur (40) porte la plaquette de contrôle (49) et l'extérieur (41) reçoit une traversée de verre (45) et un montage amplificateur et est pourvu d'un filetage extérieur (44).

10. Dispositif selon une des revendications 1 à 8, caractérisé en ce que l'alésage du carter (50) est formé conique pour accueillir le détecteur (51, 61), en ce que, en outre, les résistances pour l'allongement (55) sont placées à l'extrémité amincie du corps de détecteur (53) également conique et que le corps (53) est pourvu de canaux longitudinaux (60, 62, 63) pour un passage des conducteurs depuis les résistances d'allongement (55) jusqu'à la surface supérieure du carter d'essieu (59).

11. Dispositif selon revendication 10, caractérisé en ce que le passage de conducteurs est un canal longitudinal coaxial (60) et que les résistances d'allongement (55) sont disposées à la périphérie de l'orifice (55), côté trou borgne, du canal longitudinal coaxial (60).

12. Dispositif selon revendication 11, caractérisé en ce que le passage des conducteurs est constitué par des canaux longitudinaux parallèles à l'axe (62, 63) et que les résistances d'allongement (55) sont placées centralement par rapport aux orifices (65, 66) côté trou borgne, des canaux longitudinaux parallèles à l'axe (62, 63).

FIG.1

FIG. 2

1

FIG. 3

FIG. 4

FIG. 5

FIG. 6

FIG. 7

FIG.8